# EUROPÄISCHE PATENTANMELDUNG

(11) **EP 0 562 265 A2**
(43) Veröffentlichungstag der Anmeldung: **29.09.1993**
(21) Anmeldenummer: 93102496.2
(22) Anmeldetag: 17.02.1993
(51) Int. Cl.: A01K 1/06

(54) **Anhängevorrichtung 2**

(30) Priorität: 27.03.1992 DE 4210080
(71) Anmelder: BRAUN GmbH, D-83620 Feldkirchen-Westerham (DE)
(72) Erfinder: Braun, Johann, W-8152 Feldkirchen/Westerham (DE); Schmid, Adolf, D-85462 Eitting (DE)
(74) Vertreter: Alber, Norbert

(57) **Zusammenfassung**

Die Erfindung betrifft eine automatische Anhängevorrichtung für Stalltiere, insbesondere für Kühe, mit einem Knebel und einer Verriegelungsvorrichtung. Um eine automatische Anhängevorrichtung zu schaffen, bei der das frei herumlaufende Tier mit ausreichender Bewegungsfreiheit an der Aufstallung befestigt wird, wird vorgeschlagen, daß die Verriegelungsvorrichtung wenigstens eine Sperrplatte aufweist, die um eine Achse von einer Ruheposition in eine Sperrposition verschwenkbar ist und in der Sperrposition gegenüber einem Gegenelement der Verriegelungsvorrichtung einen Abstand einnimmt, der geringer ist als die Breite der Verdickung des Knebels.

## Beschreibung

Bei Stalltieren, insbesondere bei Rindvieh, besteht häufig das Problem, daß diese Tiere teilweise entweder im Stall oder außerhalb frei herumlaufen sollen, vor allem bei Kühen zum Melken zu bestimmten Zeiten, jedoch mit möglichst geringem Arbeitsaufwand an ihrem Stammplatz im Stall mit ausreichender Bewegungsfreiheit festgebunden werden müssen.

Zu diesem Zweck sind verschiedene Lösungen sogenannter Selbstfang-Freßgitter für Kühe, z.B. gemäß DE-OS 38 25 598, bekannt, deren Funktion darin besteht, daß ein Gitter, durch welches die Kühe den Kopf hindurchstrecken müssen, um an den Futtertrog zu gelangen, bewegliche Elemente, Streben etc. enthält, die von einer gemeinsamen Betätigungseinrichtung aus von einer geöffneten in eine geschlossene Position gebracht werden können. In dieser geschlossenen Position ist der Abstand zwischen den gegeneinander bewegten Streben so gering, daß zwar der Hals der Kuh ohne Beengen darin Platz findet, der breitere Kopf jedoch nicht durch diese Streben hindurch zurückgezogen werden kann.

Der Nachteil derartiger Selbstfang-Freßgitter besteht darin daß die Rinder im eingesperrten Zustand keine Bewegungsfreiheit mehr haben

Es ist daher die Aufgabe gemäß der Erfindung, eine automatische Anhängevorrichtung für Stalltiere zu schaffen, bei der das frei umherlaufende Stück Vieh jeweils einzeln selbstätig und unabhängig von den anderen Tieren mit ausreichender Bewegungsfreiheit an der Aufstallung befestigt wird, ohne daß hierfür alle Tiere einer Aufstellung gemeinsam eine bestimmte Position einnehmen oder andere Handlungen vollziehen müssen.

Zu diesem Zweck erscheint es notwendig, miteinander zusammenwirkende Elemente einerseits an der Kuh und andererseits an der Aufstallung zu befestigen, wofür vorteilhafterweise einerseits ein Knebel und andererseits eine den Knebel haltende Anhängevorrichtung gewählt werden. Aufgrund der unterschiedlichen Größe und unterschiedlichen Komplexität der beiden Bauteile wird vorzugsweise der Knebel an der Kuh befestigt, während die Anhängevorrichtung an der Aufstallung angeordnet wird.

Da die Anhängevorrichtung bezüglich der normalen Stellung der Kuh in der Aufstallung an einer spezifischen Stelle positioniert ist, muß der Knebel bezüglich der Kuh immer an einer im wesentlichen gleichen Stelle befestigt sein bzw. müssen alternativ mehrere solcher Knebel an geeigneten Stellen an der Kuh befestigt werden.

Vorzugsweise trägt die Kuh zu diesem Zweck ein Halsband, welches am tiefsten Punkt ein Gewicht aufweist oder verdrehsicher geformt ist und am höchsten Punkt eine den Knebel hinsichtlich Position und Ausrichtung festlegende Führung, beispielsweise in Form einer Führungshülse.

Um der Kuh auch im angehängten Zustand ausreichend Bewegungsfreiheit zu geben, soll dieser Knebel gegenüber dem Halsband und damit der Kuh einen ausreichenden Freiraum gewährleisten. Dies wird erreicht, indem der Knebel am Ende eines Zugelementes, beispielsweise eines Seiles oder Gurtes, befestigt ist, welches in einem automatischen Aufroller ebenfalls am Halsband in der Nähe des Knebels sitzt.

Anstelle eines in einem automatischen Aufroller aufgewickelten Seiles oder Gurtes kann das Halsband - ausschließlich oder zusätzlich - aus einem entsprechend gebogenen Rohr bestehen, in dem sich eine lange Spiralfeder befindet, an deren freien Ende ein Stahlseil als Zugelement für den Knebel angeordnet ist. Der Knebel kann dann entsprechend der Dehnungsmöglichkeit der in diesem Rohr angeordneten Spiralfeder herausgezogen werden, was vorteilhafterweise durch einen Maximalanschlag im Rohr begrenzt wird, um eine Überdehnung der Feder zu vermeiden. Vorteilhafterweise sind am oberen Rand der Führungshülse für den Knebel Kunststoff-Führungen, eine trichterförmige Erweiterung oder ähnliches vorgesehen, um den Verschleiß des Zugelementes am Einlauf in die Führungshülse möglichst gering zu halten.

Das Gegengewicht am tiefsten Punkt des Halsbandes sorgt dafür, daß Knebel und Aufroller immer am höchsten Punkt, also dem Nacken der Kuh bleiben, und nicht durch Drehung des Halsbandes ihre Lage verändern.

Die Anordnung am höchsten Punkt des Nakkens der Kuh empfiehlt sich aufgrund der Erfahrung, daß Kühe - vor allem während des Fressens - fast ständig den Kopf auf und ab bewegen und dadurch ein über dem Nacken befestigtes Bauteil mit hoher Wahrscheinlichkeit auf ein darüber angeordnetes, ortsfestes anderes Bauteil treffen wird.

Grundsätzlich kann jedoch auch eine andere Anordnung in Betracht kommen, beispielsweise seitlich an der Kuh, während bestimmte Positionierungen, wie etwa am tiefsten Punkt des Halsbandes, bereits aus Verschmutzungsgründen weniger geeignet erscheinen.

Bei einer gattungsgemäßen Anhängevorrichtung wird die gestellte Aufgabe durch die kennzeichnenden Merkmale des Anspruchs 1 gelöst.

Vorteilhafte Ausführungsformen ergeben sich aus den Unteransprüchen.

Die Verriegelungsvorrichtung weist dabei ein Gehäuse auf, das in der geöffneten Position in die Richtung, aus der sich der Knebel annähern soll, offen steht, und in die sich der Knebel wenigstens mit seiner Verdickung hineinbewegen kann.

Die Verriegelungsvorrichtung selbst weist dabei wenigstens eine bewegliche Sperrplatte auf, die bezüglich eines Gegenelementes einen Abstand einnimmt, durch den die Verdickung des Knebels nicht mehr zurückgezogen werden kann, und dieser Abstand muß bei Auslösung der Vorrichtung durch den verdickten Kopf des Knebels bereits am verjüngten Hals des Knebels vorliegen.

In der Sperrposition wird die Sperrplatte durch ein mechanisches Riegelelement oder durch die Schwerkraft und/oder entsprechende Beaufschlagung bei Zugeinwirkung auf den Knebel gehalten. In der anderen Position, der Ruheposition, wird die Anhängevorrichtung vorzugsweise durch die Kraft einer Feder gehalten.

Wenn die Verriegelungsvorrichtung zwei Sperrplatten aufweist, so werden diese vorzugsweise dachförmig gegeneinander geneigt sein, wobei jedoch in der Regel nicht eine Sperrplatte als Anschlag für die andere dient, sondern beide Sperrplatten an Anschlägen anliegen, die am Gehäuse der Verriegelungsvorrichtung angeordnet sind. Jede der Sperrplatten dient dabei als Gegenelement für die andere Sperrplatte, so daß in Sperrposition der Knebel zwischen den beiden Sperrplatten, die sich in der Sperrposition befinden, gehalten wird.

Dabei sind unterschiedliche Ausführungsformen der Verriegelungsvorrichtung denkbar: Bei einer Über-Totpunkt-Lösung greift an der geneigten, in der Ruheposition befindlichen Sperrplatte eine Feder an, die die Sperrplatte gegen den Anschlag der Ruheposition drückt. Wird die Sperrplatte durch Beaufschlagung mit dem verdickten Ende des Knebels aus der Ruheposition heraus ausgelenkt, so wird nach einer kurzen Wegstrecke der Totpunkt der Feder überschritten, wodurch die Sperrplatte um ihre Achse in die Sperrposition durch die Feder gebracht wird.

Falls es sich bei dieser Lösung um eine Verriegelungsvorrichtung mit zwei dachförmig gegeneinander geneigten Sperrplatten handelt, kann entweder an jeder der beiden Platten eine Über-Totpunkt-Feder oder ein elastisches Element mit äquivalenter Wirkung angeordnet sein, oder auch nur an einer Sperrplatte, während die andere Sperrplatte über einen Verbindungshebel zur ersten Sperrplatte analog bewegt wird.

In diesem Fall ist der Verbindungshebel an der federbeaufschlagten Sperrplatte oberhalb der Schwenkachse angelenkt, an der anderen Sperrplatte dagegen unterhalb deren Schwenkachse, wodurch eine spiegelbildliche Bewegung der beiden Sperrplatten zueinander sichergestellt wird.

Die beiden Sperrplatten ragen dabei in der Ruheposition über ihre Schwenkachsen so weit hinaus, daß sich ihre in der Ruheposition unteren, am weitesten entfernt liegenden, parallelen Kanten bei der Einnahme der Sperrposition bogenförmig soweit aufeinander zu bewegen, daß der zwar schmale Hals des Knebels, nicht jedoch dessen Verdikkung dazwischen Platz findet und somit der Knebel in der Sperrposition gehalten wird.

Durch ein mechanisches Riegelelement wird die Verriegelungsvorrichtung in der Sperrposition gehalten, bis das Riegelelement mechanisch, beispielsweise mittels eines über mehrere Aufstallungen verlaufenden Stellelementes, in die öffnungsfähige Position gebracht wird. Das Riegelelement verhindert auch bei starkem Zug am Knebel eine Rückbewegung der Sperrplatten in die Ruheposition, in der der Knebel aus der Verriegelungsposition entweichen könnte.

Das Gegenelement könnte anstelle einer zweiten, beweglichen Sperrplatte jedoch auch eine feste Gegenwand der Verriegelungsvorrichtung sein, die dann vorzugsweise einen Absatz aufweist, der etwa der Negativform des Absatzes zwischen Hals und Verdickung des Knebels entspricht, so daß in der Sperrposition zwischen der Sperrplatte und festen Gegenwand ein Abstand etwa in der Breite des Halses des Knebels vorhanden ist, und die darüber befindliche Verdickung oberhalb der in der Sperrposition befindlichen Sperrplatte einerseits und im entsprechenden Absatz der festen Gegenwand andererseits gut positioniert werden kann.

Die gleiche Sperrwirkung tritt auch ohne eine Über-Totpunkt-Feder und dadurch bewirkte Verschwenkung der Sperrplatte von einer geöffneten in eine geschlossene Position, wenn die Sperrplatte in der Ruheposition schräg nach oben ansteigt und in dieser Position nicht nur durch Schwerkraft, sondern auch durch eine zusätzliche Kraft, etwa einer Feder gehalten wird.

Bei der Über-Totpunkt-Lösung kann die Sperrplatte in Seitenansicht auch eine von der Ebene abweichende, gekröpfte Form aufweisen, um beispielsweise eine günstige Schwerpunktslage gegenüber der Achse zu erzielen, der dadurch bereits durch ein geringes Auslenken über den Totpunkt hinweg bewegt wird.

Weiterhin kann der Schwenkwinkel der Sperrplatte bei der Über-Totpunkt-Lösung verringert werden, indem die in der Ruhelage der Sperrplatte unteren, über die Achse hinausragenden Teile der Sperrplatte nach innen gekröpft werden, nach Art eines Greifers, und damit nur ein geringer Schwenkwinkel für das Betätigen notwendig ist, allerdings auch die nach unten freie Fläche zum Eindringen des Knebels verringert wird.

Ferner können die in der Ruheposition oberen Kanten der Sperrplatten über einen Scherenarm mit einem in der senkrechten Richtung geführten Nutenstein gelenkig verbunden sein, wobei der Nutenstein dann mit dem Stellelement verbunden ist.

Durch Hochziehen des Nutensteines wird die gelenkige Einheit aus Scherenarm und oberem, freiem Ende der Sperrplatte in die gespannte und dachförmig nach innen geneigte Position gebracht, so daß die gelenkige Verbindung zwischen Scherenarm und Sperrplatte nach Loslassen des Nutensteines nach innen klappt bis zu einer durch Anschlag vorgegebenen Position, die die Ruheposition darstellt.

Bei entsprechender Dimensionierung wird der obere Teil der Sperrplatte durch den von unten eindringenden Knebel leicht nach außen bewegt und damit über den Totpunkt der gelenkigen Verbindung zwischen Scherenarm und Sperrplatte hinaus, wodurch - bei entsprechendem Gewicht des Scherenarmes und/oder des Nutensteines - der Nutenstein in der senkrechten Führung nach unten gleitet und damit der Gelenkpunkt zwischen Scherenarm und Sperrplatte nach außen wandert, wodurch die Sperrplatte die Sperrposition einnimmt.

Befindet sich in dieser Sperrposition der Nutenstein in einer tieferen Lage als die Gelenkverbindung zwischen Scherenarm und Sperrplatte, so ist die Sperrposition auch ohne zusätzliches mechanisches Riegelelement in der Sperrposition selbsthemmend.

Eine andere Lösung kommt ohne Überstreichen eines Totpunktes aus.

Das Funktionsteil ist in diesem Fall nur der oberhalb der Schwenkachse der Sperrplatte liegende Teil der Sperrplatte, so daß eine Verlängerung der Sperrplatte über die Schwenkachse hinaus nach unten nicht notwendig ist. Durch den Druck der sich von unten nähernden Verdickung des Knebels wird die Sperrplatte entgegen der Kraft der sie beaufschlagenden Feder soweit in ihre Achse verschwenkt, daß der Knebel mit seiner Verdickung an der ausgelenkten Sperrplatte vorbei nach oben gleiten kann und sich die Sperrplatte aufgrund der Kraft der sie beaufschlagenden Feder unterhalb der Verdickung des Knebels gegen den schmaleren Hals gedrückt wird und damit den Knebel in einer verriegelten Position hält.

Dies kann durch beidseits des Knebels angeordnete, zwei dachförmig gegeneinander geneigte Sperrplatten verwirklicht werden, oder auch nur durch eine einzige Sperrplatte und eine wie oben beschriebene feste Gegenwand.

Aufgrund der auch in der Sperrposition noch schräg nach oben und innen geneigten Sperrplatte bzw. Sperrplatten klemmen diese bei Zug am Knebel automatisch im Absatz zwischen Verdickung und schmalem Hals des Knebels, so daß auch kein zusätzliches Riegelelement zum Halten der Sperrplatten in der verriegelten Position notwendig ist.

Auch in diesem Fall liegen die Sperrplatte bzw. die Sperrplatten in der Ruheposition an einem gehäusefesten Anschlag der Verriegelungsvorrichtung an, der sich wenigstens an einer Stirnseite der Verriegelugnsvorrichtung befindet.

Die Federbeaufschlagung der Sperrplatte kann durch eine von außen einwirkende Druckfeder oder eine nach innen ziehende Zugfeder bzw. eine Zugfeder zwischen den beiden gegeneinander geneigten Sperrplatten, beispielsweise außerhalb des Auftreffbereiches des Knebels in axialer Richtung versetzt, geschehen.

Da der Punkt des Auftreffens des Knebels auf die Anhängevorrichtung nicht genau bekannt ist, muß die Aufhängevorrichtung über einen größeren Auftreffbereich funktionssicher arbeiten. Zu diesem Zweck sind die Wände des Gehäuses der Anhängevorrichtung schräg nach innen oben ansteigend und auf die Auslöseplatte hinführend ausgebildet, so daß sich eine großräumige, freie untere Öffnung ergibt.

Um durch Betätigung des Stellelementes nicht die Sperrplatten sämtlicher Anhängevorrichtungen auf einmal zu öffnen oder zu schließen, besteht die Möglichkeit, die Verbindung zu einzelnen der Verriegelungsvorrichtungen vorher zu lösen, indem das Stellelement, beispielsweise eine quer über die Aufstallungen verlaufende dünne Stange oder ein Stahlseil, mittels Einhängekarabiner oder Klemmschraube mit den Verriegelungsrechen verbunden sind.

Falls Stalltiere auf diese Art und Weise angehängt werde sollen, deren Verhalten darauf schließen läßt, daß eine größere Funktionsfläche für das automatische Anhängen notwendig ist, können auch mehrere der in Längsrichtung, also in Richtung der Achsen, an beliebig groß dimensionierbaren Verriegelungsvorrichtungen parallel nebeneinander ohne gegenseitigen Abstand installiert werden, wodurch eine sehr breite Funktionsfläche entsteht.

Eine Ausführungsform gemäß der Erfindung ist im folgenden beispielhaft näher erläutert. Es zeigen:
Fig. 1 eine erste Lösung gemäß der Erfindung im geschlossenen Zustand,
Fig. 2 eine Bauform gemäß Fig. 1 bei eindringendem Knebel,
Fig. 3 die Bauform gemäß Fig. 1 mit angehängtem Knebel,
Fig. 4 eine andere Bauform gemäß der Erfindung im geöffneten Zustand,
Fig. 5 die Bauform gemäß Fig. 4 im gesperrten Zustand,
Fig. 6 eine gegenüber Fig. 4 abgewandelte Bauform im geöffneten Zustand,
Fig. 7 die Bauform gemäß Fig. 6 im gesperrten Zustand,
Fig. 8 eine weitere Bauform gemäß der Erfindung im geöffneten Zustand und
Fig. 9 die Bauform der Fig. 8 im geschlossenen Zustand.

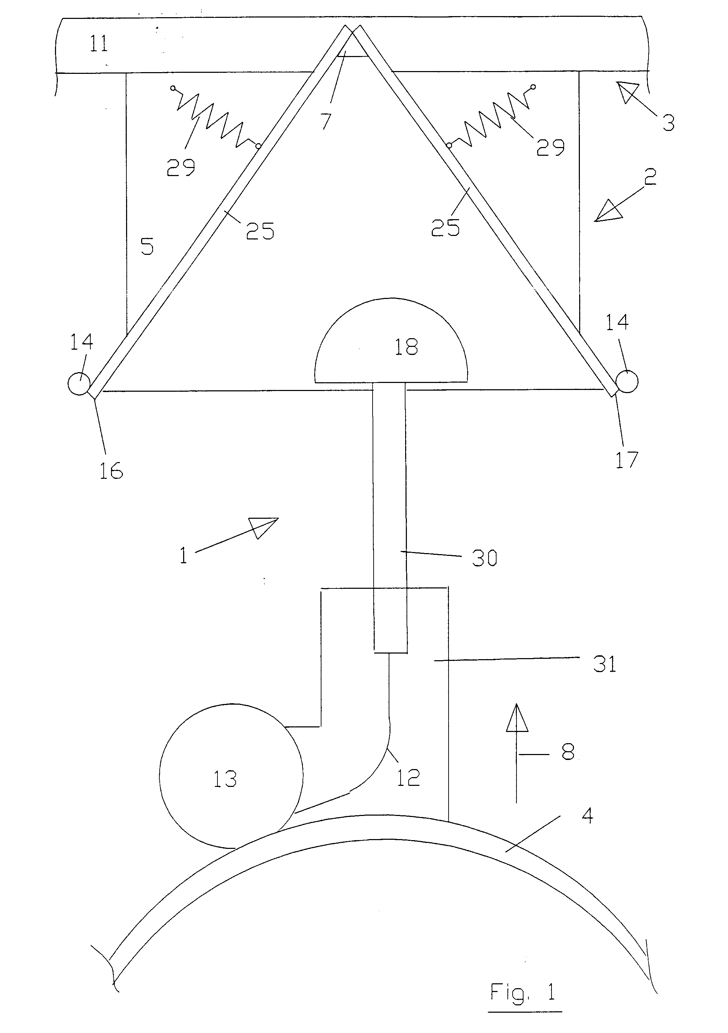

Fig. 1 bis 3 zeigt eine Lösung mit einer symmetrischen Bauform, mit zwei gegeneinander dachförmig geneigten Sperrplatten 25, die ohne eine Bewegung über einen Totpunkt hinweg auskommen.

Fig. 1 zeigt die Verriegelungsvorrichtung 2 in der offenen Ruheposition, in der der Knebel 1 aus der Annäherungsrichtung 8 her in die Verriegelungsvorrichtung 2 eindringen und diese betätigen kann. Dabei sind zwei Sperrplatten dachartig gegeneinander geneigt, die in der Nähe ihrer unteren Kanten 16, 17 um in Längsrichtung der Verriegelungsvorrichtung 2 verlaufende Achsen 14 schwenkbar gelagert sind.

In der Ruheposition, die in Fig. 1 dargestellt ist, liegen diese Sperrplatten 25 mit ihren Oberkanten nahe aneinander, indem sie an einem Anschlag 7 anliegen, der wenigstens an einer Stirnseite des Gehäuses 5 angeordnet ist.

Die beiden Sperrplatten 25 werden in dieser Ruheposition und damit am Anschlag 7 durch Beaufschlagung von Druckfedern 29 gehalten, die von außen gegen Sperrplatten 25 gerichtet sind. Der Abstand der beiden Achsen 14 und damit der Unterkanten 16, 17 der beiden Sperrplatten 25 ist deutlich größer als der Durchmesser der Verdikkung 18 am freien Ende des Knebels 1.

Der Knebel 1 sitzt mit seinem Hals 30 in einer Führungshülse 31, die vom höchsten Punkt des Halsbandes 4 des Stalltieres aus nach oben aufragt.

Der Knebel 1 ist aus der Führungshülse 31 herausziehbar und befindet sich am vorderen, freien Ende eines Zugelementes 12, beispielsweise eines Stahlseiles, welches in einem neben der Führungshülse 31, ebenfalls am Halsband 4, befestigten automatischen Aufroller aufgewickelt wird und dadurch in die Führungshülse 31 hineingezogen wird.

Durch das häufige Auf- und Abbewegen des Nackens bewegt sich auch der Knebel 1 auf und nieder und wird bei Anordnung der Verriegelugnsvorrichtung 2, mittels Befestigung an einem etwas höher verlaufenden Querrohr 11 der Aufstallung soweit in die Verriegelungsvorrichtung eindringen, daß die Verdickung 18, also das freie, obere Ende des Knebels 1, in Kontakt mit einer der Sperrplatten 25 gerät, entlang deren Unterseite nach oben geleitet wird bsi zur Anlage an der anderen Sperrplatte 25, was alles in sehr kurzen Zeiträumen geschieht.

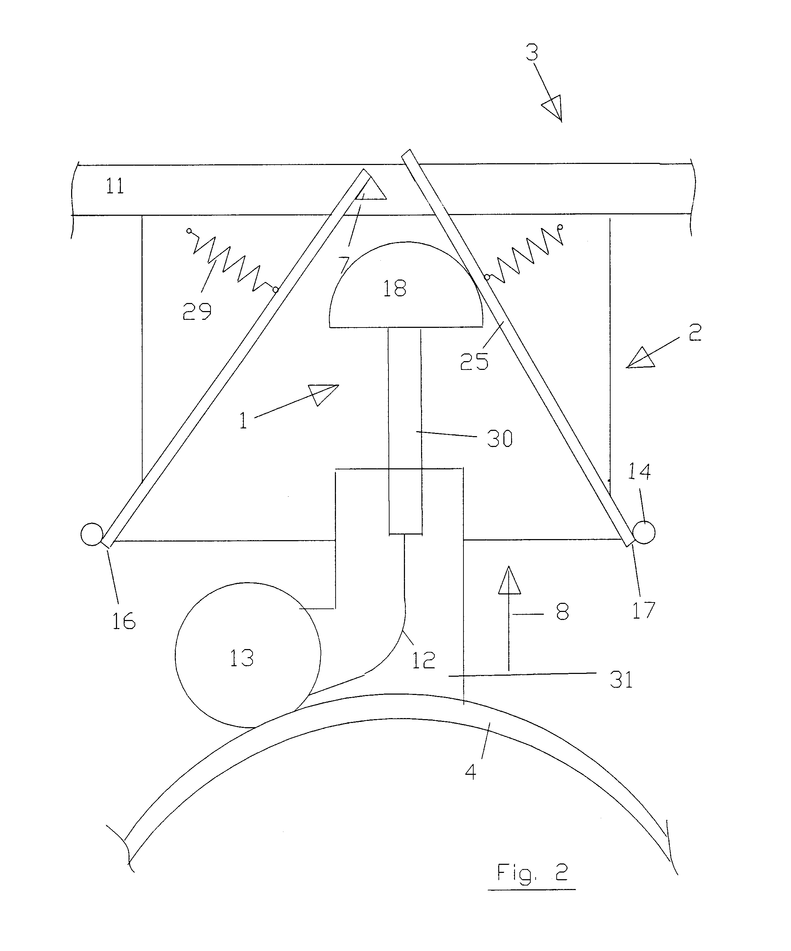

Bei weiterer Bewegung des Knebels 1 nach oben werden dann die Sperrplatten, wie in Fig. 2 dargestellt, entgegen der Kraft der Federn 29 auseinandergedrückt und der Knebel 1 bewegt sich weiter nach oben.

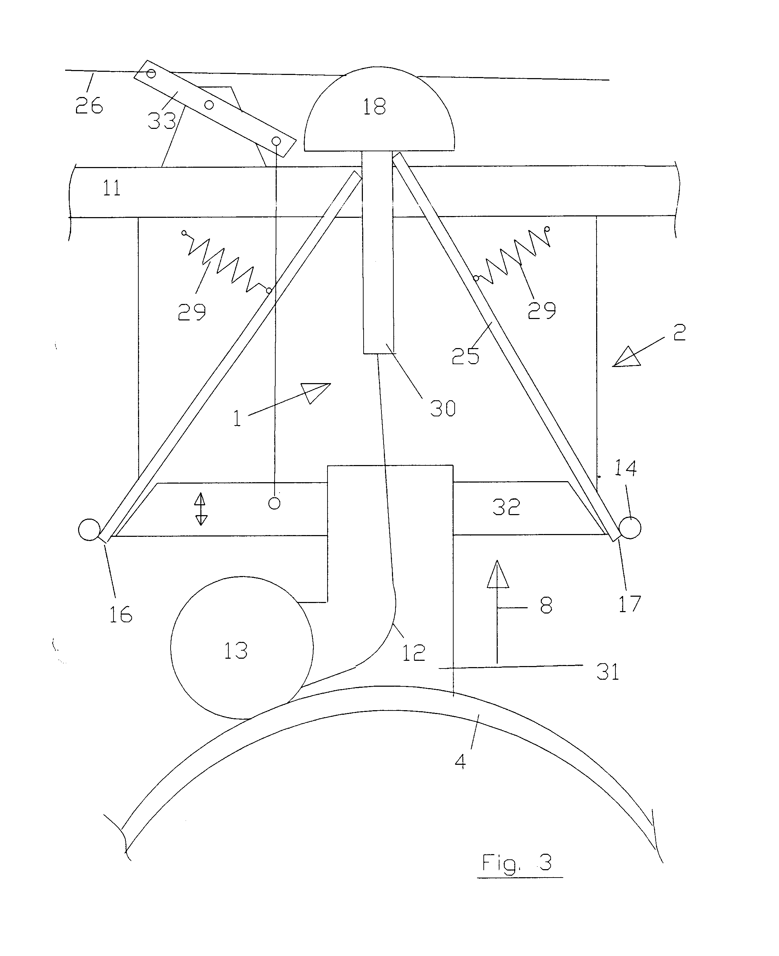

Sobald der Knebel 1 eine solche Höhe erreicht hat, daß die oberen Kanten der Sperrplatten 25 hinter der Verdickung 18 des Knebels 1 sich nach innen gegen den schlankeren Hals 30 des Knebels 1 bewegen können, werden sie diese in Fig. 3 dargestellte, gesperrte Position aufgrund der Beaufschlagung durch die Federn 29 einnehmen.

Danach kann auch durch starken Zug am unteren Ende des Knebels 1 dieser nicht mehr nach unten bewegt werden, so daß sich das Tier nur so weit von der Verriegelungsvorrichtung 2 wegbewegen kann, wie der Aufroller 13 das Zugelement 12 freigibt. Das Stalltier ist damit mit ausreichender Bewegungsfreiheit ausgestattet, aber dennoch auf den momentanen Standplatz festgelegt.

Zum Abhängen der Stalltiere insgesamt oder eines einzelnen Stalltieres werden die Sperrplatten 25 wiederum entgegen der Kraft der Federn 29 soweit auseinandergedrückt, daß der Knebel 1 einschließlich seiner Verdickung 18 sich wieder zurück nach unten bewegen kann.

Dies geschieht, wie zur Vereinfachung nur in der Fig. 3 dargestellt, beispielsweise durch das Nachobenbewegen eines Schubers 32 zwischen den Sperrplatten 25,d er nur an einer Stirnseite vorhanden sein muß. Dieser Schuber 32 oder ein anderes Öffnungselement ist mittels eines quer zur Verriegelungsvorrichtung 2, in der Regel über mehrere nebeneinander befindliche Aufstallungen vorhandenes Stellelement 26 in Form einer Stange oder eines Stahlseiles betätigbar, wobei die waagerechte Querbewegung des Stellelementes 26 mittels eines Querhebels 33 in eine senkrechte Bewegung des Schubers 32 umgesetzt wird.

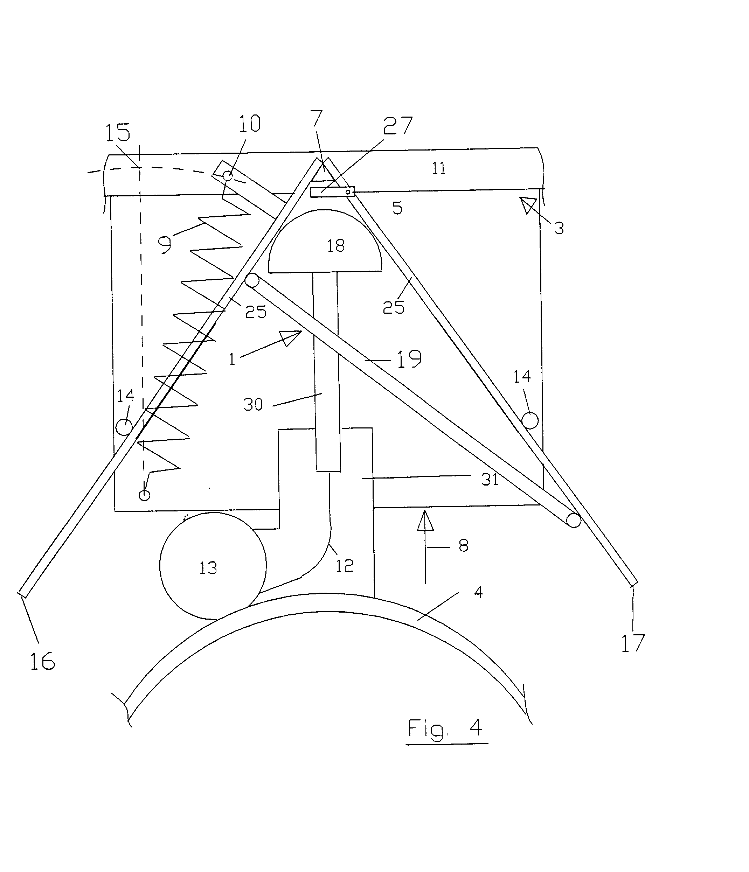

Fig. 4 zeigt ebenfalls eine Lösung mit zwei gegeneinander geneigten und in gleicher Weise um Achsen 14 drehbare Sperrplatten 25 in der unten offenen Ruheposition, wobei sich der Knebel 1 gerade in Anlage an den Sperrplatten 25 befindet.

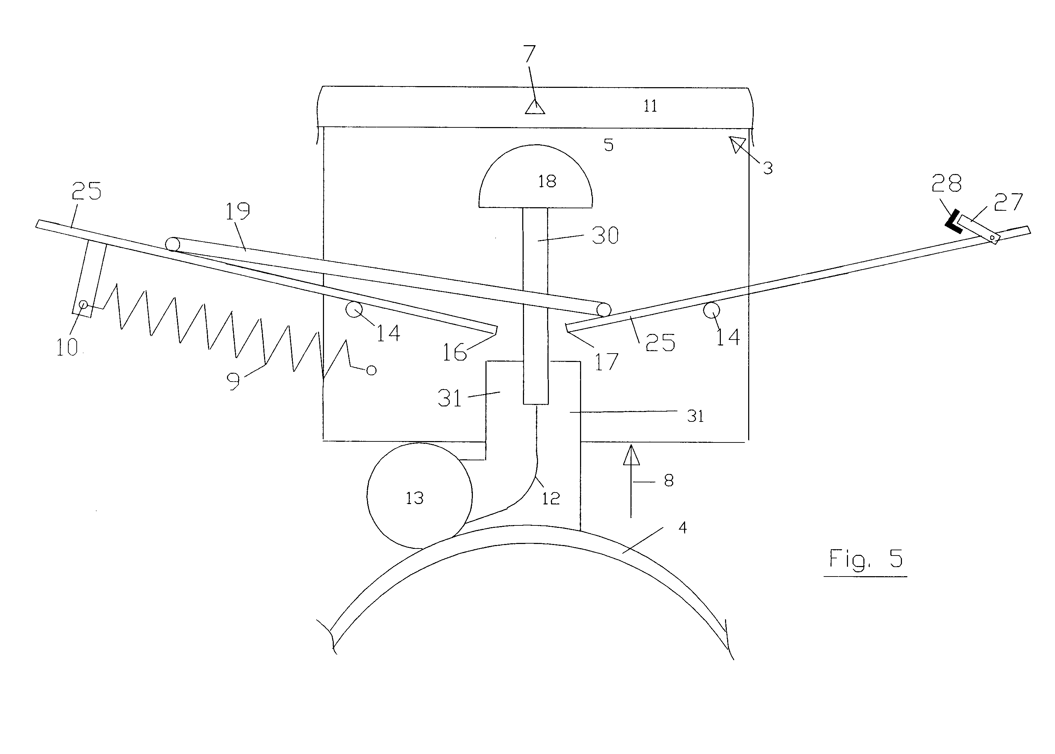

Bei der in den Fig. 4 und 5 dargestellten Bauform werden die Sperrplatten 25 jedoch durch die Verdickung 18 des Knebels 1 nicht so weit auseinander gedrückt, bis deren Oberkanten hinter der Verdickung einrasten, wie bei der Lösung der Figuren 1 bis 3.

Vielmehr wird bei nur geringfügiger Auslenkung der Sperrplatten 25 aus ihrer in Fig. 4 dargestellten Ruheposition diese aufgrund der Vorspannung durch eine Zugfeder 9 über ihren Totpunkt 15 hinwegbewegt, wodurch die Zugfeder 9 dann die Sperrplatte 25 weiter verschwenkt, bis die Unterkante 16 bzw. 17 der Sperrplatte 25 sich von unten her gegen die Verdickung 18 des Knebels 1 annähert, so daß in dieser gesperrten Position der Hals 30 zwischen den sich dann angenäherten Unterkanten 16 und 17 der Sperrplatten 25 befindet, wie in Fig. 5 dargestellt. Die Zugfeder 9 ist dabei nur an der linken Sperrplatte 25 vorhanden, während die rechte Sperrplatte 25 spiegelbildlich hierzu bewegt wird, indem sie mit der anderen Sperrplatte 25 über einen Verbindungshebel 19 gelenkig verbunden ist.

Dieser Verbindungshebel 19 ist an der linken Sperrplatte oberhalb und an der rechten Sperrplatte 25 unterhalb der Achse 14 angelenkt. Beide Sperrplatten 25 erstrecken sich über ihre Schwenkachsen 14 hinaus nach unten. Diese Verlängerung muß so lang sein, daß der Abstand zwischen den beiden Achsen 14 abzüglich der Längen der beiden unteren, freien Enden der Sperrplatten 25 noch größer ist als der Durchmesser des Halses 30, jedoch kleiner als der Durchmesser der Verdickung 18 des Knebels 1.

In der gesperrten Position wird wenigstens eine der Sperrplatten 25 und damit die gesamte Verriegelungsvorrichtung 2 gesichert, indem sich an einer der Sperrplatten 25 ein gelenkig angeordneter Riegel 27 befindet, der bei Einnahme der in Fig. 5 dargestellten Sperrposition mit seinem freien Ende so in einem Anschlag 28 in Form eines Winkelprofiles zu liegen kommt, das auch bei Beaufschlagung der nun nach innen weisenden, unteren freien Enden der Sperrplatten 25 durch den Knebel 1 eine Rückbewegung der Sperrplatten 25 in die in Fig. 4 dargestellte Ruheposition zuverlässig verhindert wird.

Die Zugfeder 9 ist an einem Angriffspunkt 10 an der Sperrplatte 25 angelenkt, der sich in deren Ruheposition außerhalb der Sperrplatte 25 und oberhalb der Achse 14 befindet. Der untere Angriffspunkt der Zugfeder 9 befindet sich unterhalb der Achse 14 an einem Punkt des Gehäuses 5.

Der Angriffspunkt 10 befindet sich nicht direkt auf der Außenfläche der Sperrplatte 25, sondern an einem nach außen wegragenden Fortsatz, so daß sich in der Ruheposition der Sperrplatte 25 der Angriffspunkt 10 nur geringfügig rechts der durch den unteren Angriffspunkt der Feder 9 verlaufenden Vertikalen befindet. Bei Auslenkung dieser Sperrplatte 25 durch den Knebel 1 bewegt sich der obere Angriffspunkt 10 der Zugfeder 9 auf einer Kreisbahn, deren Totpunkt 15 der Kreuzungspunkt mit der genannten Vertikalen ist, und sobald der Angriffspunkt 10 diesen Totpunkt 15 überschritten hat, wird die Sperrplatte 25 automatisch und schnell in die gesperrte Position der Fig. 5 gebracht.

Der Vorteil dieser Über-Totpunkt-Lösung liegt zum einen in der kurzen Reaktionszeit der Befestigungsvorrichtung 2, die auch nur ein geringfügiges Auslenken der Sperrplatten 25 erfordert und in dem zum zuverlässigen Festhalten des Knebels 1, da es sehr unwahrscheinlich ist, daß nach Auslösen der Sperrplatten 25 der Knebel 1 so schnell wieder ausreichend weit nach unten bewegt wird, daß die von unten her sich annähernden Kanten 16, 17 der Sperrplatteen 25 nicht mehr die Verdickung 18 des Knebels 1 zurückhalten können.

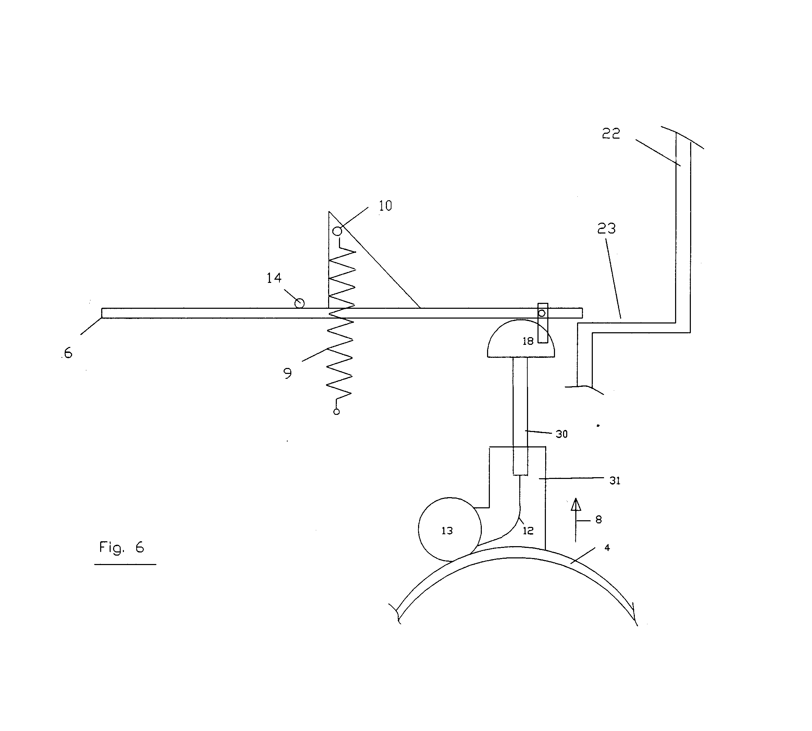

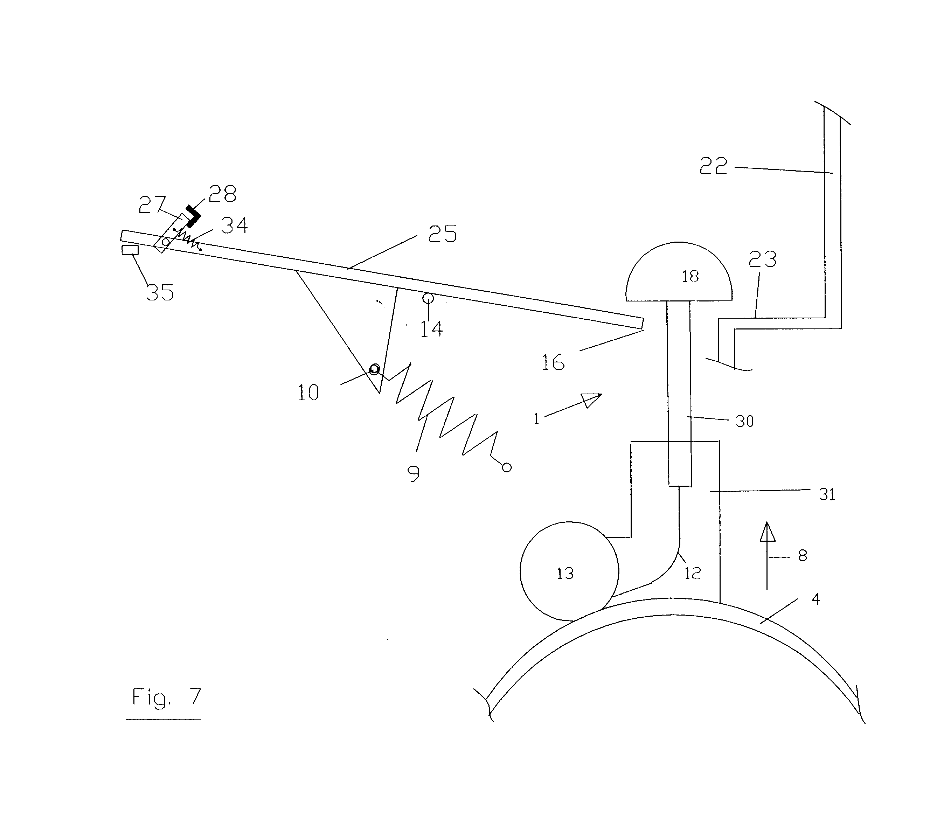

Während die Lösungen der Fig. 1 bis 3 sowie 4 und 5 jeweils im wesentlichen symmetrisch aufgebaute Bauformen mit zwei gegeneinander geneigten Sperrplatten darstellen, ist in den Fig. 6 und 7 eine von der Lösung der Fig. 4 und 5 abgewandelten, asymmetrische Lösung mit nur einer Sperrplatte 25 dargestellt. Ebenso kann auch die Lösung der Fig. 1 bis 3 mit nur einer Sperrplatte und asymmetrisch mit fester Gegenwand 22 ausgeführt werden.

In Fig. 6 ist die Sperrplatte 25 in ihrer annähernd waagerechten Ruheposition dargestellt, in der sie mit ihrem freien Ende auf einem entsprechenden Absatz 23 einer gehäusefesten Gegenwand 23 aufliegt.

Ein in der Ruheposition der Fig. 6 nach oben aufragender Fortsatz dient als Angriffspunkt 10 für die Zugfeder 9, die sich bei Auslenken der Sperrplatte 25 wiederum sehr schnell ihren Totppunkt 15 erreicht hat und nachfolgend die Sperrplatte 25 um die Achse 14 herum weiter um annähernd 180 verschwenkt, bis die untere freie Kante 16 der Sperrplatte 25 wieder unter der Verdickung 18 des Knebels 1 anliegt, wie in Fig. 7 dargestellt. Sobald dabei gleichzeitig auch ein mechanischer Riegel 27, der an der Sperrplatte 1 gelenkig befestigt ist, an einem L-förmigen Anschlag 28 anliegt, so daß eine Rückbewegung der Sperrplatte 25 unmöglich ist, ist der Knebel 1 in einer gesperrten Position.

Zu diesem Zweck ist der Riegel 27 beispielsweise auf einer Stirnseite der Sperrplatte 25 auf derjenigen Seite der Achse 14 angeordnete, auf der sich auch der Angriffspunkt 10 der Feder 9 befindet. Der Riegel 27 wird dabei durch eine Zugfeder 34 in einer spitzwinkligen Lage zur Sperrplatte 25 gehalten. Beim Verschwenken der Sperrplatte in die gesperrte Position gleitet der Riegel 27 über den winkligen Anschlag 28 hinweg unter kurzfristiger Dehnung der Zugfeder 34, die den Anschlag 27 in der Sperrposition, die durch einen Anschlag 35 gegenüber der Sperrplate 25 festgelegt wird, in den Winkel des Anschlages 28 hinein, wobei ein Schenkel dieses Winkels etwa tangential zur Richtung des Bewegungsbogens der Sperrsplatte 25 verläuft, und der andere Schenkel hierzu in etwa rechtwinklig.

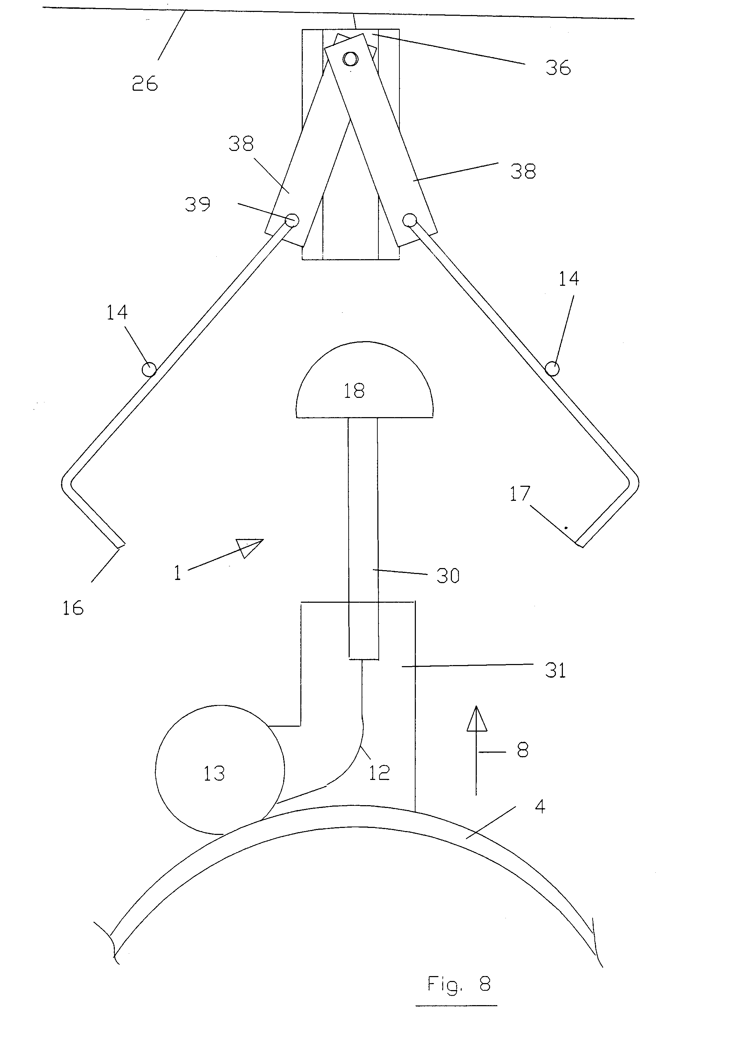

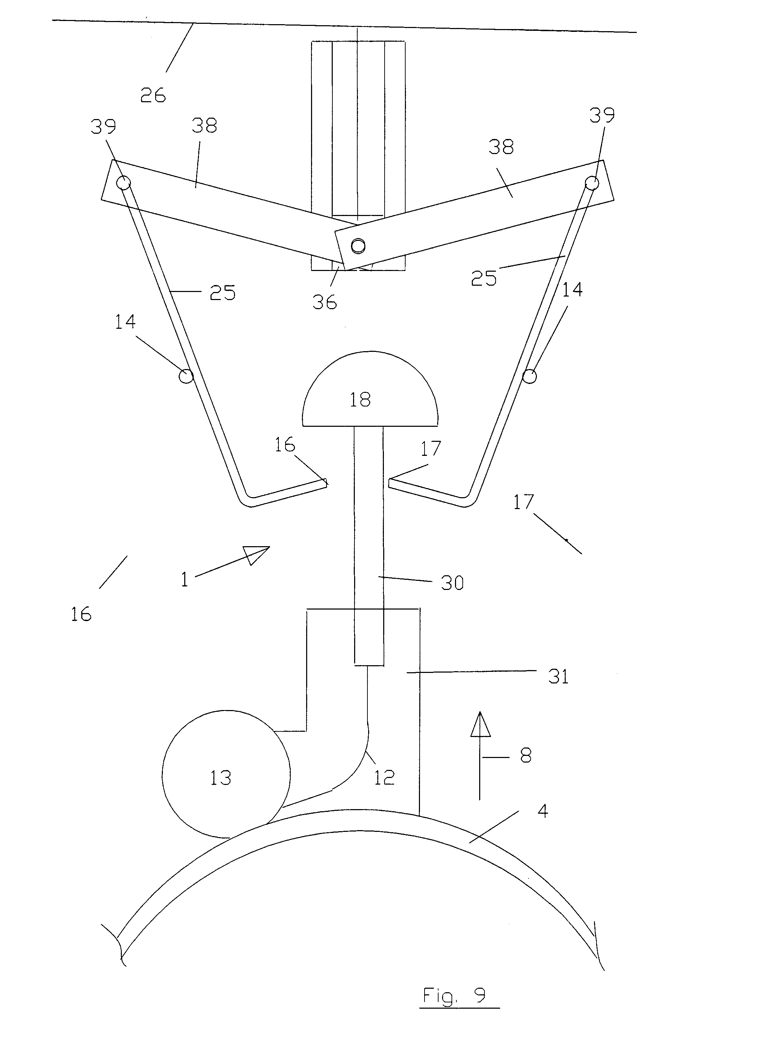

Fig. 8 und 9 zeigen wiederum eine symmetrisch ausgebildete Lösung, die jedoch auch einseitig mit Gegenwand 22 realisiert werden kann. Im Unterschied zur Lösung der Fig. 1 bis 3 sind hier die Sperrplatten 25 nicht eben, sondern die unteren, über die Achse 14 hinausragenden Enden sind gekröpft zur Mitte hin ausgebildet.

Dabei verringert sich der notwendige Schwenkweg der Sperrplatten 21, um von der geöffneten Position in die Sperrposition zu gelangen, allerdings wird dadruch auch die Breite der freien unteren Öffnung in der Ruheposition, wie in Fig. 8 dargestellt, verringert, indem der Knebel 1 eindringen muß.

Weiterhin erfolgt das Verschwenken der Sperrplatten 25 nicht mittels einer über-Totpunkt-Feder wie bei der Lösung gemäß 4 und 5, sondern mittels jeweils eines Scherenarmes 38, die jeweils am oberen Ende der Sperrplatten 25 gelenkig befestigt sind, und dabei einen Totpunkt überstreichen, und an ihrem anderen Ende gelenkig an einem Nutstein 36 befestigt sind, der in einer vertikalen Führungsschiene 37 hin und herbewegt werden kann.

In Ruheposition befindet sich der Nutenstein 36 annähernd in seiner höchsten Position, während der obere Bereich jeder Sperrplatte 25 mit dem Scherenarm 38 einschließlich des Deckels aus Plastik eine leicht nach unten innen durchhängende, mittels eines Anschlages 7 begrenzte, Stellung einnimmt. Bei Einwirken des Knebels 1 mit seinem oberen, freien Ende auf einen oberen Bereich einer Sperrplatte 25 wird diese leicht nach außen bewegt, wodurch das Gelenk 39 zwischen Scherenarm 38 und der oberen Kante der Sperrplatte 25 über die gestreckte Lage und damit den Totpunkt hinaus bewegt wird.

Dadurch gleitet - bei entsprechender Gewichtsverteilung zwischen Scherenarmen 38 einerseits und Sperrplatten 25 andererseits der Nutenstein 36 nach unten, wodurch die Scherenarme 38 in eine immer flachere Position, kommen und sich ihre Gelenke 39 immer weiter nach außen bewegen. Dadurch bewegen sich die unteren freien Kanten 16, 17 der Sperrplatten 25 aufeinander zu und halten den Knebel 1 unterhalb seiner Verdickung 18 fest.

Dadurch, daß der Nutenstein 36 eine tiefste Lage in der gesperrten Position einnimmt, die tiefer liegt als die Gelenke 39 zwischen dem Scherenarm 38 und den Sperrplatten 25, ist die Verriegelugnsvorrichtung 2 in dieser in Fig. 9 dargestellten gesperrten Position selbsthemmend.

Sie wird geöffnet durch Zug des Nutensteines 36 nach oben, was durch Anbindung des Nutensteines 5 an einem Stellelement 26 möglich ist wie bei den anderen Ausführungsformen beschrieben.

Obwohl vom Gewicht und Platzbedarf her die Verriegelungsvorrichtung 2 größer ist als der Knebel 1, kann es dennoch sinnvoll sein, die Verriegelungsvorrichtung 2 am Tier und den Knebel 1 an der Aufstallung 3 zu befestigen. Denn dadurch wird bei voll ausgenutzter Bewegungsfreiheit des Tieres im angehängten Zustand und plötzlichem Öffnen der Verriegelungsvorrichtung 2 ein Verfangen des Zugelementes 12 am den Kopf des Tieres vermieden.

## Patentansprüche

1. Automatische Anhängevorrichtung für Stalltiere, insbesondere für Kühe, mit einem Knebel (1) und einer Verriegelungsvorrichtung (2), dadurch gekennzeichnet, daß die Verriegelungsvorrichtung (2) wenigstens eine Sperrplatte (25) aufweist, die um eine Achse (14) von einer Ruheposition in eine Sperrposition verschwenkbar ist und in der Sperrposition gegenüber einem Gegenelement der Verriegelungsvorrichtung (2) einen Abstand einnimmt, der geringer ist als die Breite der Verdickung (18) des Knebels (1).

2. Anhängevorrichtung nach Anspruch 1,
dadurch gekennzeichnet, daß
die Anhängevorrichtung mittels Federkraft in der Ruheposition und/oder der Sperrposition gehalten wird.

3. Anhängevorrichtung nach einem der vorhergehenden Ansprüche,
dadurch gekennzeichnet, daß
die Verriegelungsvorrichtung (2) zwei Sperrplatten (25) aufweist, die in der Ruheposition dachförmig gegeneinander geneigt sind und im wesentlichen das Gehäuse (5) der Verriegelungsvorrichtung (2) bilden, wobei die zweite Sperrplatte (5) als Gegenelement dient.

4. Anhängevorrichtung nach einem der vorhergehenden Ansprüche,
dadurch gekennzeichnet, daß
an wenigstens einer Sperrplatte (25) eine Zugfeder (9) so angreift, daß deren Angriffspunkt (10) bei geringfügiger Auslenkung der Sperrplatte (25) aus der Ruheposition über ihren Totpunkt (15) hinauswandert und die Sperrplatte (25) dann in die Sperrposition zieht.

5. Anhängevorrichtung nach einem der vorhergehenden Ansprüche,
dadurch gekennzeichnet, daß
daß von den beiden Sperrplatten (25) in der Ruheposition die weitesten entfernten, parallelen Kanten (16, 17) außerhalb der Achsen (15) liegen und in der Sperrposition diese Kanten (16, 17) den geringsten Abstand der beiden Sperrplatten (25) zueinander einnehmen, der dann geringer ist als der Durchmesser der Verdickung (18) des Knebels (1), wobei die Kanten (16, 17) in der Sperrposition hinter der Verdickung (18) des Knebels (1) an der Schmalstelle des Knebels (1) zu liegen kommen, wenn sich die Verdickung (18) im Kontakt mit den Sperrplatten (25) in der Ruheposition befunden hat.

6. Anhängevorrichtung nach einem der Ansprüche 1 bis 5,
dadurch gekennzeichnet, daß
eine Sperrplatte (25) eine Feder (9) aufweist und diese Sperrplatte (25) über einen Verbindungshebel (19) von einem Punkt auf derjenigen Seite der Achse (14), die gegen den Angriffspunkt (10) gerichtet ist, zu einem Punkt an der anderen Sperrplatte (25) auf der anderen Seite deren Achse (14) verbunden ist.

7. Anhängevorrichtung nach einem der Ansprüche 1 bis 5,
dadurch gekennzeichnet, daß
als Gegenelement eine feste Gegenwand (22) mit Absatz (23) dient, wobei der Absatz (23) entsprechend den Abmessungen am Übergang zwischen der Verdickung (18) und dem schmaleren Hals des Knebels dimensioniert ist.

8. Anhängevorrichtung nach einem der vorhergehenden Ansprüche,
dadurch gekennzeichnet, daß
am oberen Ende der Sperrplatte (25) mittels eines Gelenkes (39) ein Scherenarm(38) angelenkt ist, dessen oberes Ende in einem nur vertikal beweglichen Nutenstein gelagert ist, wobei das Gelenk (39) über die gestreckte Lage als Totpunkt hinweg bewegt werden kann.
LÖSUNG OHNE TOTPUNKT:

9. Anhängevorrichtung nach Anspruch 1, 2 oder 3,
dadurch gekennzeichnet, daß
zwei dachartig gegeneinander geneigte Sperrplatten (25) angeordnet sind, die in der Nähe der unteren parallelen Kanten (6) um die Achsen (14) drehbar gelagert sind und gegen die jeweils eine andere Sperrplatte (25) in der Nähe ihres oberen Endes gedrückt werden.

10. Anhängevorrichtung nach Anspruch 9,
dadurch gekennzeichnet, daß
in der Ruheposition an wenigstens einem Ende der Berührungslinie zwischen den Sperrplatten (25) wenigstens ein Anschlag (7) für die Sperrplatten (25) angeordnet ist.
ALLGEMEINE KRITERIEN:

11. Anhängevorrichtung nach einem der vorhergehenden Ansprüche,
dadurch gekennzeichnet, daß
der Knebel (1) am höchsten Punkt eines Halsbandes (4) der Kuh befestigt ist und die Verriegelungsvorrichtung (2) an der Aufstallung (3) über dem Nacken der Kuh.

12. Anhängevorrichtung nach einem der vorhergehenden Ansprüche,
dadurch gekennzeichnet, daß
der Knebel (1) am Ende eines Zugelementes (12) angeordnet ist, welches in der Ruheposition sich selbsttätig in einem Aufroller (13) aufwickelt, der am Halsband (4) befestigt ist.

13. Anhängevorrichtung nach einem der vorhergehenden Ansprüche,
dadurch gekennzeichnet, daß
ein sich über mehrere Aufstallungen (3) erstreckendes Stellelement (26) die Verriegelungsvorrichtungen (2) miteinander verbindet und diese von der Sperrposition in die offene Position bewegen kann.

14. Anhängevorrichtung nach einem der vorhergehenden Ansprüche,
dadurch gekennzeichnet, daß
von dem Stellelement (26) jede Verriegelungsvorrichtung (2) einzeln abkoppelbar ist.

15. Anhängevorrichtung nach einem der vorhergehenden Ansprüche,
dadurch gekennzeichnet, daß
als Aufroller (13) und Zugelement (12) der Gurt mit zugehörigem Aufroller eines herkömmlichen Autosicherheitsgurtes verwendet wird.

16. Anhängevorrichtung nach einem der vorhergehenden Ansprüche,
dadurch gekennzeichnet, daß
der Knebel (1) am Ende eines Zugelementes (12) angeordnet ist, das sich am freien Ende einer Zugfeder befindet, die in einem Rohr entlang des Halses des Tieres geführt ist.
